Europäisches Patentamt

European Patent Office

Office européen des brevets

(11) Publication number: **0 064 666**
A1

## (12) EUROPEAN PATENT APPLICATION

(21) Application number: 82103575.5

(22) Date of filing: 27.04.82

(51) Int. Cl.³: **G 01 N 27/58**
**H 05 B 3/22, H 05 K 1/09**
**H 01 B 1/02, C 04 B 41/38**

(30) Priority: 12.05.81 JP 70079/81

(43) Date of publication of application:
17.11.82 Bulletin 82/46

(84) Designated Contracting States:
DE FR GB

(71) Applicant: NISSAN MOTOR COMPANY, LIMITED
No.2, Takara-cho, Kanagawa-ku
Yokohama City(JP)

(72) Inventor: Akimune, Yoshio c/o Oppama Plant of
Nissan Motor Co., Ltd
No . 1 Natsuhima-cho Yokosuka City(JP)

(72) Inventor: Ambe, Satoshi c/o Oppama Plant of
Nissan Motor Co., Ltd
No. 1 Natsushima-cho Yokosuka City(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 43
D-8000 München 22(DE)

(54) Method of producing ceramic substrate having heater layer formed by using conductive paste.

(57) A method of producing a ceramic substrate (28), which has a thin heater layer (34) and is useful in a gas sensing element (30) such as a solid electrolyte oxygen sensing element of the concentration cell type, through the steps of applying a paste containing a conductive powder which comprises a metal of the platinum group onto a sheet (12) of an unfired ceramic material so as to form a conductive paste layer (14) in the pattern of an intended heater layer, drying the paste layer (14) and sintering the ceramic material sheet (12) and the conductive powder container in the paste layer (14) simultaneously. As the improvement, the conductive powder in the paste is required to be not greater than 10.0 $m^2/g$ in specific surface area. This limitation has the effect of enhancing the stability and durability of the heater layer (34) even when the substrate (28) is subjected to severe conditions as in exhaust systems in automobiles.

*FIG.1(B)*

*FIG.2*

0064666

EP643

PATENTANWÄLTE
GRÜNECKER DR. KINKELDEY · DR. STOCKMAIR
DR. SCHUMANN · JAKOB · DR. BEZOLD · MEISTER
HILGERS · DR. MEYER · PLATH

METHOD OF PRODUCING CERAMIC SUBSTRATE HAVING

HEATER LAYER FORMED BY USING CONDUCTIVE PASTE

## BACKGROUND OF THE INVENTION

This invention relates to a method of producing a ceramic substrate which has a heater layer and is useful in a gas sensing element by using a paste containing an electrically conductive powder as the material for the heater layer.

There are various kinds of gas sensing elements for measuring concentrations of a specific gaseous element or compound such as oxygen, hydrogen, carbon monoxide or a hydrocarbon in mixed gases. In the automobile industry, for example, it has become popular to dispose an oxygen sensing element in the exhaust system in order to detect actual air/fuel ratio values in the engine. Usually the principal material of the oxygen sensing element is either an oxygen ion conductive solid electrolyte which provides an oxygen concentration cell or an oxide semiconductor of which resistance depends on the concentration of oxygen in an ambient gas atmosphere.

A recent trend is to miniaturize an oxygen sensing element, or any other gas sensing element, by constructing it as a laminate of thin, film-like layers on a ceramic substrate of very small size. In many cases the ceramic substrate is provided with an electrically conductive layer which serves as a heater layer to maintain the sensing element in operation at an adequately elevated temperature. For example, an oxygen concentration cell using a solid electrolyte such as zirconia functions efficiently and accurately when heated to about 600-650°C.

As an industrially convenient method, a thin heater layer is provided to a ceramic substrate by first applying a paste containing an electrically conductive powder such as a platinum powder onto the substrate by screen-printing, for example, so as to form a conductive paste layer in the pattern of an intended heater layer, drying the paste layer, and then firing the paste-applied substrate to sinter the conductive powder contained in the applied paste. To reduce the cost of production and also to ensure firm adhesion of the heater layer to the substrate, it is preferred to perform the printing of the conductive paste while the ceramic substrate remains in a green or unfired state and to simultaneously sinter the substrate and the heater layer. Where it is intended to embed the heater layer in the substrate, it is usual to prepare an unfired intermediate of the substrate by face-to-face bonding of two sheets formed of an unfired ceramic composition preceded by formation of a conductive paste layer on the surface of one of the two unfired ceramic sheets.

However, conventional ceramic substrates having heater layers formed by the above described method are not fully satisfacotry in the stableness and durability of the heater layers. When gas sensing elements using such ceramic substrates are operated under severe conditions as in the cases of oxygen sensing elements disposed in exhaust pipes in automobiles, the heater layers often undergo considerable changes in their resistance and are liable to break within a time period far shorter than an expected service life of the gas sensing elements.

SUMMARY OF THE INVENTION

It is an object of the present invention to provide an improved method of producing a ceramic substrate having a heater layer and being useful in a gas sensing element, which method uses an electrically conductive paste in the way as described hereinbefore but gives a ceramic substrate having an improved heater layer which is excellent in durability and highly stable even when subjected to severe conditions as in exhaust systems of automotive engines.

A method according to the invention has the steps of applying a paste containing an electrically conductive powder, which comprises a metal of the platinum group

or an alloy thereof dispersed in an organic liquid vehicle, onto an unfired sheet formed of a composition containing a powder of a ceramic material so as to form a conductive paste layer in the pattern of an intended heater layer, drying the conductive paste layer, and firing the sheet on which the conductive paste layer is formed so as to sinter the conductive paste layer into a solid heater layer and to simultaneously sinter the sheet into a rigid ceramic substrate, and the principal feature of the invention resides in that the conductive powder in the paste is not greater than 10.0 $m^2/g$ in specific surface area.

The use of a powder not greater than 10.0 $m^2/g$ in specific surface area means to avoid using an extremely fine powder. Until now it has been a common practice to prepare a conductive paste by using a conductive powder very small in particle size and large in specific surface area. However, we have recognized that a fundamental cause of the insufficient durability of a heater layer provided to a ceramic substrate by using a conductive paste is the fineness of the conductive powder used in the paste. At the stage of firing the substrate in the form of a green sheet with the conductive paste layer formed thereon, sintering of the fine powder contained in the conductive paste layer proceeds so rapidly that it becomes difficult to obtain a heater layer in the form of a uniformly sintered and truly solid body. Actually the heater layer tends to have a considerably interstitial structure or a sort of network structure, and the heater layer of such a structure is liable to undergo great changes in its resistance during practical use and even breaks in a considerably high probability when subjected to severe conditions.

By using a conductive powder not greater than 10.0 $m^2$/g in specific surface area, it becomes possible to obtain a uniformly sintered heater layer in which the sintered particles closely adhere to one another. Therefore, the heater layer in a ceramic substrate produced by a method according to the invention is excellent in durability and stableness. More particularly, the heater layer undergoes only very small changes in its resistance during long use as a part of a gas sensing element, and the probability of breaking of the heater layer greatly lowers even when the gas sensing element is used under severe conditions as in exhaust systems in automobiles.

To maximumly enhance the stableness of the resistance of the heater layer, it is desirable to use a conductive powder having a specific surface area in the range from 0.1 to 5.0 $m^2$/g.

Except the limitation to the specific surface area of the conductive powder, a method according to the invention is analogous to the known method described hereinbefore. It is possible to embed the heater layer in the substrate by using two sheets of unfired ceramic material in the way as described hereinbefore. It is also possible to accomplish fixing of lead wires for the heater layer to the substrate simultaneously with sintering of the substrate and the heater layer by placing end portions of the lead wires respectively on two terminal regions of the conductive paste layer before sintering.

A ceramic substrate produced by a method according to the invention can be used in various kinds of known gas sensing elements, including oxygen sensing elements of the concentration cell type utilizing an oxygen ion conductive solid electrolyte typified by $ZrO_2$ stabilized with $Y_2O_3$ or $CaO$, oxygen sensing elements of the resistance variation type utilizing an oxide semiconductor such as $CoO$ or $TiO_2$, hydrogen sensing elements, carbon monoxide sensing elements and methan, ethane and/or still different hydrocarbon sensing elements.

BRIEF DESCRIPTION OF THE DRAWINGS

Figs. 1(A) to 1(D) illustrate a proces of producing an exemplary ceramic substrate by a method according to the invention;

Fig. 2 is an explanatorily sectional view of an oxygen sensing element in which a ceramic substrate produced by a method of the invention is used; and

Fig. 3 shows a pattern of operation of an automobile simulated in an endurance test carried out on ceramic substrates produced in examples of the invention.

DESCRIPTION OF THE PREFERRED EMBODIMENTS

Alumina is a typical example of ceramic materials for substrate to be produced by a method according to the invention, but it is also possible to make a selection from other conventionally used ceramic materials such as mullite, spinel and forsterite. Using a wet mixture of a powdered ceramic material and a liquid vehicle prepared by dissolving an organic binder in a suitable solvent, a green or unfired ceramic material sheet can be formed by a known method such as extruding method, rolling method or so-called doctor-blade method.

The conductive powder as the fundamental material for the heater layer must comprise one of the metals of the platinum group, i.e. Ru, Rh, Pd, Os, Ir and Pt, or an alloy thereof. Of course it is possible to use a powder of a metal of the platinum group (or an alloy thereof) alone as the conductive powder, but it is also possible to use a mixture of a major amount of such a metal or alloy powder and a minor amount of a powder of a ceramic material such as alumina or zirconia as the conductive powder. In most cases it is suitable to use a powder of platinum or its alloy. In any case, the conductive powder as a whole is required to be not greater than 10.0 $m^2/g$ in specific surface area.

A conductive paste for use in the present invention is prepared by uniformly dispersing a selected conductive powder in an organic liquid vehicle. The materials for the organic liquid vehicle can be chosen among various organic binders and solvents used in conventional conductive pastes. A preferred example of useful organic binders is a cellulose derivative such as ethyl cellulose or methyl cellulose, and terpineol is an example of solvents suitable for such a cellulose derivative.

There is no particular restrictions as to the method of applying a conductive paste onto the unfired ceramic material sheet, but in most cases it is convenient to employ a screen-printing method.

After drying of a conductive paste layer formed on the unfired ceramic material sheet, the production of the ceramic substrate is completed by simultaneous sintering of the ceramic material sheet and the conductive powder contained in the paste layer. In the case of using the ceramic substrate in a gas sensing element of which sensitive-part has at least one layer sintered on the ceramic substrate, it is possible to perform the sintering operation as the final step of the production of the ceramic substrate during the production of the gas sensing element to thereby accomplish the sintering of the ceramic substrate (and the heater layer) and the sensitive part of the gas sensing element simultaneously.

The method according to the invention will be illustrated by the following Examples.

EXAMPLE 1

An alumina paste containing 72% by weight of an alumina powder was prepared by dispersing the alumina powder and a small amount of talc in a liquid vehicle prepared by dissolving polyvinyl butyral (binder), dibutyl phthalate (plasticizer) and a dispersant in a mixture of ethanol and n-butanol, and kneading the resultant wet composition. This alumina paste was shaped into a thin sheet by a doctor-blade method, and the sheet was dried. The green alumina sheet prepared in this way had a thickness of about 0.7 mm.

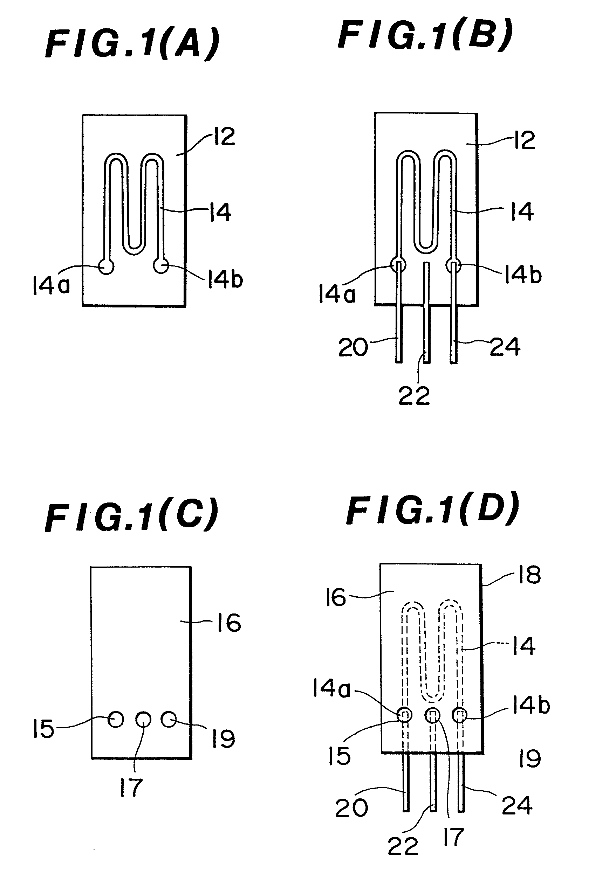

Referring to Fig. 1(A), a rectangular sheet 12 of a desired size, e.g. 5 mm x 9 mm, was cut out of the aforementioned green alumina sheet to use it as the material of a lower part of a plate-shaped substrate of a very small-sized gas sensor element. As the first step of providing a heater layer to the substrate, an electrically conductive paste containing platinum powder was applied onto a major surface of the green alumina sheet 12 by screen-printing so as to form a conductive paste layer 14 in the pattern of an elongate and zigzag path, and the paste layer 14 was dried at about $100^{o}C$ for 1 hr. After drying, the paste layer 14 had a thickness of about 10 $\mu$ m and a width of about 0.3 mm. As illustrated, this paste layer 14 had two terminal regions 14a and 14b each of which was circular in plan view shape with a diameter of about 1 mm.

In this example, the conductive paste was prepared by dispersing 75 parts by weight of a platinum powder which was 1.69 mm in mean particle size (measured by a subsieve analyzer), 0.46 $m^2$/g in specific surface area and 4.02 $g/cm^3$ in bulk density in 25 parts by weight of an organic vehicle, which was a solution of 13 parts by weight of ethyl cellulose in 87 parts by weight of terpineol.

In Fig. 1(B) indicated at 20, 22 and 24 are three platinum wires (each 0.2 mm in diameter and about 7 mm in length) employed as lead wires of the intended gas sensor element. In a parallel and spaced arrangement, tip portions of these lead wires 20, 22, 24, were placed on the surface of the green alumina sheet 12 such that the tip portions of the first and third lead wires 20 and 24 lay on the two terminal regions 14a and 14b of the conductive paste layer 14, respectively, while the tip portion of the second lead wire 22 lay in the middle between the other lead wires 20 and 24 without making contact with any region of the conductive paste layer 14.

Fig. 1(C) shows another green alumina sheet 16 prepared as the material of an upper part of the substrate. This green alumina sheet 16 was similar in material and dimensions to the green alumina sheet 12 of Fig. 1(A), but three circular through-holes 15, 17 and 19 (each 0.8 mm in diameter) were formed in an end region of this green alumina sheet 16. These holes 15, 17, 19 were arranged in a row at intervals corresponding to the intervals in the arrangement of the three lead wires 20, 22, 24 in Fig. 1(B).

Referring to Fig. 1(D), the green alumina sheet 16 of Fig. 1(C) was placed on the other green alumina green sheet 12 in the state of Fig. 1(B), and the two sheets 12 and 16 were bonded to each other by applying a pressure of 3 kg/cm$^2$ for a few minutes. As illustrated, three holes 15, 17 and 19 in the upper green alumina sheet 16 were located just above the tip portions of the three lead wires 20, 22 and 24, respectively, so that the tip portions of the lead wires 20, 22, 24 were partly exposed to the atmosphere through the respective holes 15, 17, 19. A conductive paste (not illustrated) containing a platinum powder was filled into the three holes 15, 17, 19 and dried. The process illustrated by Figs. 1(A) to 1(D) gave an unfired alumina substrate 18 which was provided with lead wires 20, 22, 24 and the dried platinum paste layer 14.

The production of an alumina substrate can be completed by subjecting the unfired substrate 18 in the state of Fig. 1(D) to a firing process, wherein the combination of the two green alumina sheets 12 and 16 is sintered into a rigid alumina plate and the conductive paste layer 14 sandwiched between the two green alumina sheets 12 and 16 is sintered into a conductive solid layer that serves as a heater element. Simultaneously, the conductive paste in each of the three holes 15, 17 and 19 is sintered into a conductive solid body which firmly adheres to both the sintered alumina plate and the lead wire 20, 22 or 24 lying beneath. In the first and third holes 15 and 19, the sintered conductive bodies firmly adhere to the terminal regions of the sintered heater element too. Accordingly, very sure electrical connections are established between the first and third lead wires 20, 24 and the heater layer in the sintered substrate. The conductive solid body formed in the second hole 17 is used to electrically connect the second lead wire 22 with an electrode in a gas sensor element produced by using the completed substrate.

In this example, however, such a firing process was preceded by the formation of an intermediate of an oxygen-sensitive structure in the form of a laminate of unfired layers on the upper surface of the unfired substrate 18, and the substrate and the laminate formed thereon were sintered simultaneously by a single firing process.

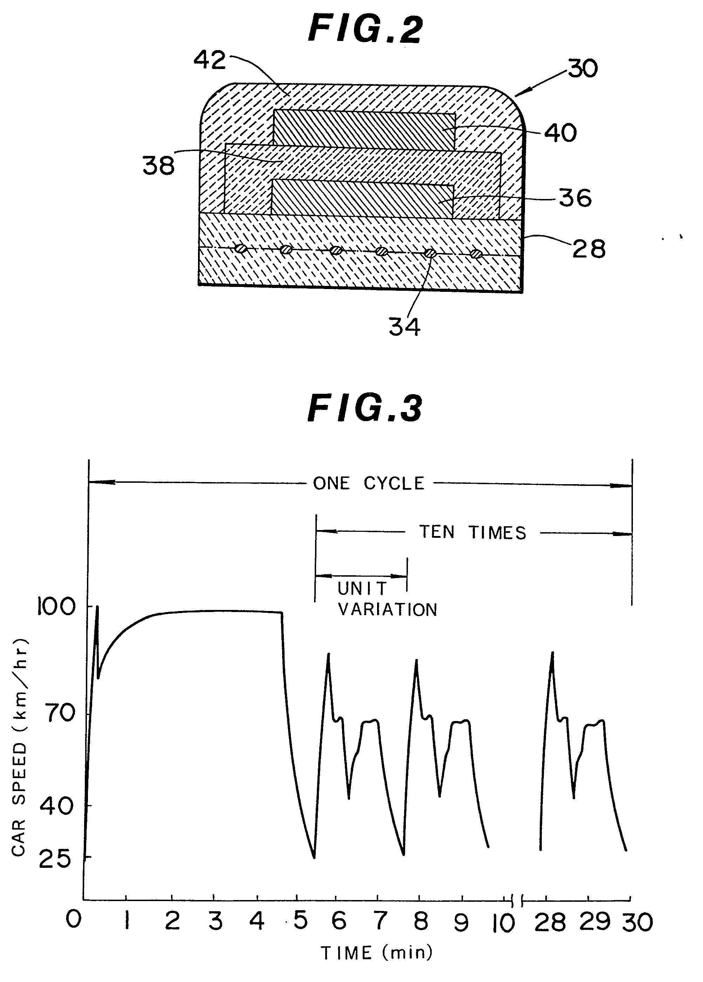

Fig. 2 shows the construction of an oxygen sensor element 30 produced by this method. Indicated at 28 is an alumina substrate given by sintering of the unfired substrate 18 in Fig. 1(D) with a heater layer 34 (given by sintering of the conductive paste layer 14) embedded therein. The sensitive part of this element 30 is a laminate consisting of an inner electrode layer 36, an oxygen ion conductive solid electrolyte layer 38 and an outer electrode layer 40. A porous protecting layer 42 covers the outer surfaces of the sensitive part so that a gas subject to measurement comes into contact with the outer electrode layer 40 through this porous layer 42. The inner electrode layer 36 is connected with the second lead wire 22 in Fig. 1(D) via the conductive solid body in the second hole 17. The outer electrode layer 40 is connected with the third lead wire 24 via the conductive solid body in the third hold 19. The laminate of the three layers 36, 38 and 40 functions as an oxygen concentration cell that generates an electromotive force where there is a difference between an oxygen partial pressure on the outer electrode side of the oxygen ion conductive solid electrolyte layer 38 and an oxygen partial pressure on the inner electrode side of the solid electrolyte layer 38. These three layers 36, 38 and 40 are all microscopically porous and permeable to gases.

In operation, a DC power supply is connected to the heater 34 in the substrate 28 via the first and third lead wires 20 and 24 to keep the heater 34 energized so as to maintain the sensor element 30 at an appropriately elevated temperature. Another DC power supply is connected with the inner and outer electrode layers 36 and 40 by using the second and third lead wires 22 and 24 to make a DC current of a controlled intensity to flow in the solid electrolyte layer 38 from the inner electrode layer 36 toward the outer electrode layer 40. As described in U.S. Patents Nos. 4,207,157 and 4,224,113, the flow of the current in the solid electrolyte layer 38 forces oxygen ions to migrate from the outer electrode layer 40 to the inner electrode layer 36, and a reference oxygen partial pressure of a nearly constant magnitude can be maintained at the interface between the inner electrode layer 36 and the solid electrolyte layer 38 as a joint effect of the migration of oxygen ions and outward diffusion of oxygen molecules from the inner electrode layer 36. Therefore, the oxygen sensor element 30 generates an electromotive force the magnitude of which depends on the difference between the reference oxygen partial pressure in the element 30 and the partial pressure of oxygen in the gas atmosphere in which the element 30 is disposed. To measure the electromotive force, a voltage measuring device is connected between the second and third lead wires 22 and 24 in parallel with the power supply for supplying the aforementioned DC current to the sensitive part of this element 30.

In this example, the oxygen sensor element 30 was produced in the following way. First, a conductive cermet paste, which was prepared by dispersing a mixture of 90 parts by weight of a platinum powder and 10 parts by weight of a ceramic material powder consisting of 95 mole% of $ZrO_2$ and 5 mole% of $Y_2O_3$ in an organic liquid vehicle, was applied to the upper surface of the unfired substrate 18 in Fig. 1(D) by screen-printing so as to form a conductive paste layer in the predetermined pattern of the inner electrode layer 36. This paste layer was formed with an arm portion extending to the second hole 17 in Fig. 1(D) already filled with the conductive paste. After drying of this conductive cermet paste layer, a solid electrolyte paste prepared by dispersing a solid electrolyte material powder consisting of 95 mole% of $ZrO_2$ and 5 mole% of $Y_2O_3$ in an organic liquid vehicle was applied by screen-printing so as to form a solid electrolyte paste layer which covered substantially the entire area of the conductive cermet paste layer. After a drying procedure, the aforementioned conductive cermet paste was applied onto the outer surface of the solid electrolyte paste layer by screen printing in the predetermined pattern of the outer electrode layer 40, and dried. This conductive paste layer was formed with an arm portion extending across a marginal region of the solid electrolyte paste layer to the third hole 19 in Fig. 1(D) already filled with the conductive paste. The thus prepared intermediate of the sensor element was fired in air at 1500°C for 2 hr to thereby accomplish simultaneous sintering of the alumina substrate, heater layer in the substrate, conductors in the three holes of the substrate and the sensitive part laminated on the substrate. In the sensor element 30 produced in this example, the solid electrolyte layer 38 was about 20 $\mu$m in thickness and each of the inner and outer electrode layers 36 and 40 was about 10 $\mu$m in thickness. After that, the porous protecting layer 42 was formed by plasma-spraying of a spinel ($MgO \cdot Al_2O_3$) powder.

Some samples of the oxygen sensor element 30 were produced by the above described method to subject them to an endurance test as described hereinafter together with different samples produced in the following examples and references.

<div align="center">EXAMPLES 2-8</div>

In these examples, the preparation of the unfired substrate 18 shown in Fig. 1(D) and the production of the oxygen sensor element 30 of Fig. 2 were performed generally in accordance with Example 1, except that platinum powders different in specific surface area (and also in mean particle size measured by a subsieve analyzer and bulk density) as shown in the following Table were used in forming the conductive paste layer 14 in Fig. 1(A). As subsidiary modifications, the weight ratio of the platinum powder to the solution of ethyl cellulose in terpineol in preparing a conductive paste for forming the paste layer 14 was varied within the range from 60:40 to 80:20, and/or the weight ratio of ethyl cellulose to terpineol was varied within the range from 10:90 to 15:85, in order to correct variations in the viscosity of the paste with variations in the particle size and bulk density of platinum powder. As can be seen in the Table, every platinum powder used in Examples 1 to 8 to form the heater layer 34 was smaller than 10.0 $m^2/g$ in specific surface area.

REFERENCES 1-3

Also in these references the preparation of the unfired substrate 18 and the production of the oxygen sensor element 30 were performed generally in accordance with Example 1, except that platinum powders greater than 10.0 $m^2/g$ in specific surface area were used, as shown in the Table, in forming the conductive paste layer 14 in Fig. 1(A).

In Example 6, use was made of a mixture of 58.6 parts by weight of the platinum powder used in Example 5 and 41.4 parts by weight of the platinum powder used in Example 7.

In Example 8, use was made of a mixture of 85.6 parts by weight of the platinum powder used in Example 7 and 14.4 parts by weight of the platinum powder used in Reference 3.

In Reference 1, use was made of a mixture of 75.5 parts by weight of the platinum powder used in Example 7 and 24.5 parts by weight of the platinum powder used in Reference 3.

Endurance Test

The oxygen sensor element samples produced in Examples 1-8 and References 1-3 were fixedly disposed in the exhaust pipe of an automotive gasoline engine, and the heater 34 in each sample was kept energized so as to maintain a nearly constant temperature of about $600^{o}C$. The engine was operated so as to vary the car speed in a pattern as shown in Fig. 3, and the test was continued for a total period of time corresponding to a total distance of 50000 km travelled by the car. The electrical conduction of the heater layer 34 in every sample was examined at intervals of 10000 km in terms of the travelled distance. When the break of the heater layer was found in 20% or more of the samples of any example or reference, the samples of that example or reference were judged to have reached a limit of endurance. With respect to every sample that did not suffer breaking of the heater layer before the end of the endurance test (50000 km), the resistance of the heater layer was measured to examine the magnitude of a change in the heater resistance caused by the endurance test.

The following Table contains the results of this
endurance test.

| Samples | Platinum Powder for Heater | | | Endurance (km) | Change in Resistance of Heater (%) |
|---|---|---|---|---|---|
| | Specific Surface Area $(m^2/g)$ | Mean Particle Size $(\mu m)$ | Bulk Density $(g/cm^3)$ | | |
| Example 1 | 0.46 | 1.69 | 4.02 | 50000 | 1.0 |
| Example 2 | 0.88 | 1.13 | 3.54 | 50000 | 1.1 |
| Example 3 | 1.00 | 1.06 | 4.09 | 50000 | 4.0 |
| Example 4 | 2.30 | 0.62 | 2.53 | 50000 | 4.0 |
| Example 5 | 5.80 | 0.19 | 1.32 | 50000 | 5.1 |
| Example 6 | 7.14 | | | 50000 | 5.5 |
| Example 7 | 9.04 | 0.20 | 1.08 | 50000 | 6.3 |
| Example 8 | 9.90 | | | 40000 | 6.7 |
| Reference 1 | 10.50 | | | 30000 | 10.0 |
| Reference 2 | 12.30 | 0.33 | 1.50 | 20000 | 14.3 |
| Reference 3 | 15.00 | 0.12 | 1.03 | 20000 | 20.0 |

As can be seen in the Table, the oxygen sensor
element samples produced in any of Examples 1-8 by
using a platinum powder smaller than 10.0 $m^2/g$ in specific
surface area as the conductive material for the heater
layer 34 were more than 50000 km in their endurance
determined by the above described rate of breaking of the heater.  In contrast, the samples produced in any of References 1-3 by using a platinum powder greater than 10.0 $m^2$/g in specific surface area were less than 40000 km in their endurance.  Furthermore, those samples of References 1-3 which passed the 50000 km endurance test were found to have undergone considerably great changes in the resistance of the heater layer during the endurance test.  This fact indicates the occurrence of local breaking of the electrical conduction in the heater layers of these samples.

The samples of Examples 1-8 underwent only far smaller changes in the resistance of the heater layer during the 50000 km endurance test, and the magnitude of the resistance change was especially small when use was made of a platinum powder very small in specific surface area as in Examples 1-4.  In this regard, the result of this endurance test evidences the preferableness of using a platinum powder having a specific surface area in the range from 0.1 to 5.0 $m^2$/g to provide a heater layer to the substrate by a printing-firing method.

WHAT IS CLAIMED IS:

1. A method of producing a ceramic substrate which has a heater layer and is useful in a gas sensing element, the method having the steps of applying a paste containing an electrically conductive powder, which comprises a metal selected from metals of the platinum group and alloys thereof dispersed in an organic liquid vehicle, onto an unfired sheet (12) formed of a composition containing a powder of a ceramic materail so as to form a conductive paste layer (14) in the pattern of an intended heater layer (34), drying the conductive paste layer, and firing said sheet on which the conductive paste layer is formed so as to sinter the conductive paste layer into a solid heater layer (34) and to simultaneously sinter said sheet into a rigid ceramic substrate (28),

characterized in that said conductive powder in said paste is not greater than 10.0 $m^2$/g in specific surface area.

2. A method according to Claim 1, wherein said conductive powder is entirely a powder of a metal selected from metals of the platinum group and alloys thereof.

3. A method according to Claim 1, wherein said conductive powder is a mixture of a major amount of a powder of
a metal selected from metals of the platinum group
and alloys thereof and a minor amount of a powder of
a ceramic material.

4. A method according to Claim 1, wherein the specific
surface area of said conductive powder is in the range
from 0.1 to 5.0 $m^2$/g.

5. A method according to Claim 1, further comprising
the step of placing end portions of two lead wires
on said unfired sheet after the step of applying said
paste such that tip portions of said two lead wires
lie on two terminal regions of said conductive paste
layer, respectively.

6. A method according to Claim 1 or 5, further comprising
the step of placing another unfired sheet (16) formed
of said composition on said sheet (12) after the application
of said paste but before the sintering step such that
said conductive paste layer is sandwiched between said
sheet and said another sheet.

7. A method according to Claim 1, wherein said organic
liquid vehicle comprises a cellulose derivative which

-24-

serves as a binder dissolved in an organic solvent.

8.  A method according to Claim 1, wherein said ceramic material is selected from the group consisting of alumina, mullite, spinel and forsterite.

9.  A method according to Claim 1, wherein said paste is applied to said sheet by a screen-printing method.

**FIG.1(A)**

**FIG.1(B)**

**FIG.1(C)**

**FIG.1(D)**

# FIG.2

# FIG.3

## EUROPEAN SEARCH REPORT

European Patent Office

| Category | Citation of document with indication, where appropriate, of relevant passages | Relevant to claim |
|---|---|---|
| | PATENT ABSTRACTS OF JAPAN, unexamined applications, P Field, vol. 5, no. 32, February 27,1981 THE PATENT OFFICE JAPANESE GOVERNMENT, page 24 P 50 | |
| Y | + Kokai no. 55-154 451 (NISSAN) + | 1,4 |
| X | + Kokai no. 55.154 451 (NISSAN) + | 2,3, 5-9 |
| | & JP-A-55-154 451 | |
| | -- | |
| Y | GB - A - 1 540 212 (MATSUSHITA) + page 4, lines 54-79 + | 1,4 |
| | -- | |
| Y | US - A - 3 573 229 (HERBST et al.) + column 4, lines 65-71; column 6, lines 65-68 + | 1,4 |
| | -- | |
| A | US - A - 4 207 159 (KIMURA et al.) | |
| | ---- | |

### DOCUMENTS CONSIDERED TO BE RELEVANT

### CLASSIFICATION OF THE APPLICATION (Int. Cl. 3)

G 01 N 27/58
H 05 B 3/22
H 05 K 1/09
H 01 B 1/02
C 04 B 41/38

### TECHNICAL FIELDS SEARCHED (Int.Cl. 3)

G 01 N 27/00
G 01 N 25/00
H 05 B 3/00
H 05 K 1/00
H 05 K 3/00
H 01 B 1/00
C 04 B 41/00
H 01 C 1/00
H 01 C 7/00
H 01 C 17/00

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | |
|---|---|---|
| X | The present search report has been drawn up for all claims | |
| Place of search VIENNA | Date of completion of the search 02-08-1982 | Examiner KUTZELNIGG |

EPO Form 1503.1 06.78